# EUROPEAN PATENT APPLICATION

(11) **EP 4 429 194 A1**
(43) Date of publication of application: **11.09.2024**
(21) Application number: 22889323.6
(22) Date of filing: 02.11.2022
(51) Int. Cl.: H04L 51/046

(54) **CHAT INFORMATION SENDING METHOD AND APPARATUS**

(30) Priority: 02.11.2021 CN 202111287503
(71) Applicant: Vivo Mobile Communication Co., Ltd., Dongguan, Guangdong 523863 (CN)
(72) Inventor: HAO, Yiqing, Dongguan, Guangdong 523863 (CN)
(74) Representative: Conti, Marco
(86) International application number: PCT/CN2022/129278
(87) International publication number: WO 2023/078301

(57) **Abstract**

This application discloses a method and an apparatus for sending chat information, and pertains to the field of Internet. The method for sending chat information includes: receiving a first input by a user for a target session message in the chat information; displaying M first identifiers and displaying P user identifiers according to the first input, where M and P are both positive integers; receiving a second input by the user, where the second input is used to associate a first target identifier in the M first identifiers with a second target identifier in the P user identifiers; and sending, in response to the second input, a session message that corresponds to the first target identifier and that is in the chat information to a user corresponding to the second target identifier.

## Description

### CROSS-REFERENCE TO RELATED APPLICATIONS

This application claims priority to Chinese Patent Application No. 202111287503.8 filed in China on November 2, 2021, which is incorporated herein by reference in its entirety.

### TECHNICAL FIELD

This application pertains to the field of Internet, and specifically relates to a method and an apparatus for sending chat information.

### BACKGROUND

In a use process of a mobile terminal (such as a mobile phone), a user usually forwards chat information of interest to friends.

In a process of forwarding chat information in related technologies, it is usually necessary to long press a message to select the message. At this time, a forward option appears. A user selects the forward option to enter a user selection interface. At this time, the user may select, on the user selection interface, a target user to which this message is to be sent. After selection, the message may be sent to the selected target user.

However, when the user needs to forward all messages that are associated with a particular concern and that are in the chat information, this forwarding manner in related technologies requires manually searching the chat information one by one for all the messages associated with the concern, and then forwarding the messages after finding the messages, resulting in low forwarding efficiency.

### SUMMARY

Embodiments of this application provide a method and an apparatus for sending chat information, to improve forwarding efficiency of chat information.

According to a first aspect, an embodiment of this application provides a method for sending chat information. The method includes:
receiving a first input by a user for a target session message in the chat information;
displaying M first identifiers and displaying P user identifiers according to the first input, where M and P are both positive integers;
receiving a second input by the user, where the second input is used to associate a first target identifier in the M first identifiers with a second target identifier in the P user identifiers; and
sending, in response to the second input, a session message that corresponds to the first target identifier and that is in the chat information to a user corresponding to the second target identifier.

According to a second aspect, an embodiment of this application provides an apparatus for sending chat information. The apparatus includes:
a receiving module, configured to receive a first input by a user for a target session message in the chat information;
a display module, configured to: display M first identifiers and display P user identifiers according to the first input, where M and P are both positive integers;
the receiving module is further configured to receive a second input by the user, where the second input is used to associate a first target identifier in the M first identifiers with a second target identifier in the P user identifiers; and
a sending module, configured to: send, in response to the second input, a session message that corresponds to the first target identifier and that is in the chat information to a user corresponding to the second target identifier.

According to a third aspect, an embodiment of this application provides an electronic device. The electronic device includes a processor, a memory, and a program or an instruction that is stored in the memory and that can be run on the processor, where when the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction to implement the method according to the first aspect.

In the embodiments of this application, a first input by a user for a target session message in the chat information is received; M first identifiers are displayed and P user identifiers are displayed according to the first input, where M and P are both positive integers; a second input by the user is received, where the second input is used to associate a first target identifier in the M first identifiers with a second target identifier in the P user identifiers; and a session message that corresponds to the first target identifier and that is in the chat information is sent to a user corresponding to the second target identifier in response to the second input. In this way, in a case that the user needs to forward all messages that are associated with a particular concern and that are in the chat information, the user may forward all session messages that correspond to the first target identifier (corresponding to the concern) and that are in the chat information to the user corresponding to the second target identifier, and does not need to manually search the chat information one by one for all messages associated with the first target identifier, so that forwarding efficiency of the chat information is improved.

### BRIEF DESCRIPTION OF DRAWINGS

FIG. 1 is a schematic flowchart of a method for sending chat information according to an embodiment of this application;
FIG. 2 is a schematic diagram of a picture corresponding to a current chat interface in a method for sending chat information according to an embodiment of this application;
FIG. 3 is a schematic diagram of a picture corresponding to a current chat interface in another method for sending chat information according to an embodiment of this application;
FIG. 4 is a schematic diagram of a picture corresponding to a current chat interface in another method for sending chat information according to an embodiment of this application;
FIG. 5 is a schematic diagram of a picture corresponding to a current chat interface in another method for sending chat information according to an embodiment of this application;
FIG. 6 is a schematic diagram of a picture corresponding to a current chat interface in another method for sending chat information according to an embodiment of this application;
FIG. 7 is a schematic diagram of a picture corresponding to a current chat interface in another method for sending chat information according to an embodiment of this application;
FIG. 8 is a schematic diagram of a picture corresponding to a current chat interface in another method for sending chat information according to an embodiment of this application;
FIG. 9 is a schematic structural diagram of an apparatus for sending chat information according to an embodiment of this application;
FIG. 10 is a schematic structural diagram of an electronic device according to an embodiment of this application; and
FIG. 11 is a schematic diagram of a hardware structure of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, a method for sending chat information provided in embodiments of this application is described in detail below by using a specific embodiment and an application scenario thereof.

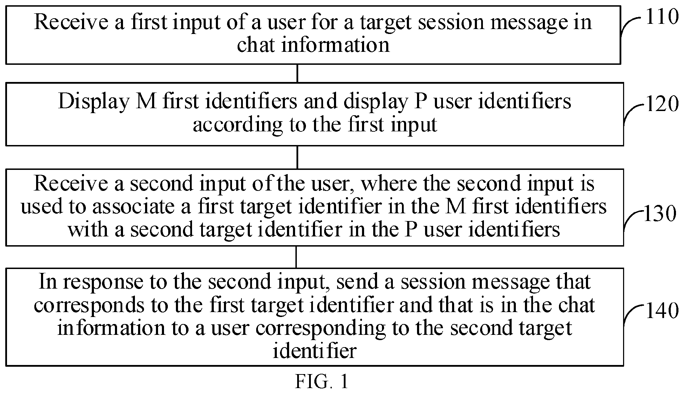

FIG. 1 is a schematic flowchart of a method for sending chat information according to an embodiment of this application.

As shown in FIG. 1, the method for sending chat information according to an embodiment of this application may include:

Step 110: Receive a first input by a user for a target session message in the chat information.

Step 120: Display M first identifiers and display P user identifiers according to the first input, where M and P are both positive integers.

Step 130: Receive a second input by the user, where the second input is used to associate a first target identifier in the M first identifiers with a second target identifier in the P user identifiers.

Step 140: Send, in response to the second input, a session message that corresponds to the first target identifier and that is in the chat information to a user corresponding to the second target identifier.

In step 110, the chat information may include one or more session messages in a chat interface displayed on a current chat application. The chat information may be one-to-one chat information, or may be group chat information. This is not specifically limited in this application.

In step 110, the target session message may be one session message in the chat information, or may be a plurality of session messages in the chat information. This is not specifically limited in this application.

In step 110, the first input may be a selection operation, a confirmation operation, a clicking operation, or another operation of the user on the target session message in the chat information. This is not specifically limited in this application. The first input may be one operation of the user on the target session message in the chat information, or may be a series of operations of the user on the target session message in the chat information. This is not specifically limited in this application. The following provides descriptions by using examples.

For example, the first input may be a selection operation of the user on the target session message in the chat information. Further, in step 120, the M first identifiers are displayed and the P user identifiers are displayed in response to the selection operation of the user on the target session message in the chat information.

For another example, the first input may be a long-press operation and a clicking operation of the user on the target session message in the chat information. Further, in step 120, an option "Message association forwarding" is displayed in response to the long-press operation of the user on the target session message in the chat information; and the M first identifiers and the P user identifiers are displayed in response to the clicking operation of the user on the option "Message association forwarding".

In step 120, M and P are both positive integers. Each of the M first identifiers may be one type of identifier associated with the target session message. For example, each of the M first identifiers may be an identifier extracted from the target session message. Certainly, each of the M first identifiers may alternatively be an identifier of another type. This is not specifically limited in this application.

In step 120, each of the P user identifiers may be an identifier of any contact in a contact list of a current chat application. This is not specifically limited in this application.

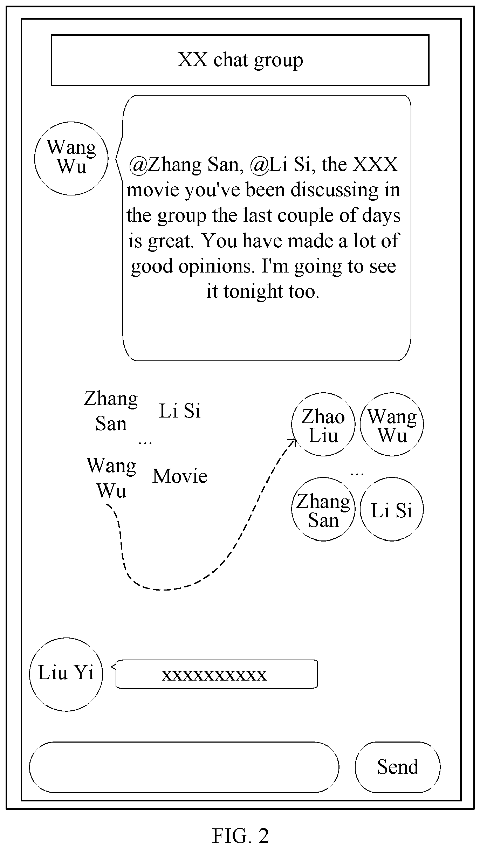

In step 120, the M first identifiers and the P user identifiers may be displayed at the same time. The M first identifiers may be displayed on one side of the target session message, and the P user identifiers may be displayed on the other side of the target session message. For example, as shown in FIG. 2, the M first identifiers are displayed on the lower left of the target session message, and the P user identifiers are displayed on the lower right of the target session message.

If there is a relatively large quantity of P user identifiers, the P user identifiers may be displayed in a target display area with a fixed size on the other side of the target session message. The P user identifiers are displayed in the target display area according to a slide operation on the target display area.

In step 130, the second input is used to associate the first target identifier in the M first identifiers with the second target identifier in the P user identifiers. There may be one or more first target identifiers; and there may be one or more second target identifiers. This is not specifically limited in this application.

In step 130, the second input may be an operation of associating the first target identifier in the M first identifiers with the second target identifier in the P user identifiers by the user. The association operation may be a confirmation operation, a clicking operation, a drag operation, or another operation. This is not specifically limited in this application. The second input may be one operation, or may be a series of operations. This is not specifically limited in this application. The following provides descriptions by using examples.

For example, the second input may be a clicking operation on the first target identifier in the M first identifiers and a clicking operation on the second target identifier in the P user identifiers. It may be understood that, the first target identifier and the second target identifier may be clicked at the same time, or the first target identifier and the second target identifier may be clicked successively within a particular time. On this basis, in step 140, in response to the clicking operation on the first target identifier in the M first identifiers and the clicking operation on the second target identifier in the P user identifiers, the session message that corresponds to the first target identifier and that is in the chat information is sent to the user corresponding to the second target identifier.

For another example, the second input may be a drag operation of dragging the first target identifier in the M first identifiers onto the second target identifier in the P user identifiers (as shown by the arrow in FIG. 2). On this basis, in step 140, in response to the operation of dragging the first target identifier in the M first identifiers onto the second target identifier in the P user identifiers by the user, the session message that corresponds to the first target identifier and that is in the chat information is sent to the user corresponding to the second target identifier.

In step 140, the session message that corresponds to the first target identifier and that is in the chat information is essentially one type of session message corresponding to the first target identifier, and there may be one or more session messages corresponding to the first target identifier. In this way, one type of session messages that correspond to the first target identifier and that are in the chat information may all be forwarded to the user corresponding to the second target identifier, so that one type of session messages in the chat information are all forwarded according to the type of the session messages, thereby improving forwarding efficiency of the chat information.

In this embodiment of this application, a first input by a user for a target session message in the chat information is received; M first identifiers are displayed and P user identifiers are displayed according to the first input, where M and P are both positive integers; a second input by the user is received, where the second input is used to associate a first target identifier in the M first identifiers with a second target identifier in the P user identifiers; and a session message that corresponds to the first target identifier and that is in the chat information is sent to a user corresponding to the second target identifier in response to the second input. In this way, in a case that the user needs to forward all messages that are associated with a particular concern and that are in the chat information, the user may forward all session messages that correspond to the first target identifier (corresponding to the concern) and that are in the chat information to the user corresponding to the second target identifier, and does not need to manually search the chat information one by one for all messages associated with the first target identifier, so that forwarding efficiency of the chat information is improved.

The foregoing describes that one type of session messages that correspond to the first target identifier and that are in the chat information are all forwarded to the user corresponding to the second target identifier. The first target identifier is at least one identifier in the M first identifiers, and the M first identifiers may include different types of identifiers, and the first identifier may be an identifier determined based on the target session message.

For example, the first identifier includes at least one of the following: an identifier of a sender of the target session message; an identifier of a user involved in the target session message; and an identifier of a topic involved in the target session message; and the like.

In this way, session messages with a specific condition (that is, the session messages that correspond to the first target identifier and that are in the chat information) may be used as one type of session messages, to ensure that one type of session messages have relatively high associativity in various dimensions, so that associated session messages are all forwarded as one type of session messages.

In addition, the first target identifier may be one or more identifiers in the M first identifiers. The following separately describes the two cases by using specific examples.

In a case that a quantity of the first target identifier is 1, the solution of this application is described by using examples based on different types of first target identifiers.

In a specific embodiment, using an example in which the first target identifier is an identifier of a sender of the target session message, in a case that the first target identifier is the identifier of the sender of the target session message, the session message that corresponds to the first target identifier and that is in the chat information may be the first session message. The first session message includes a session message that is sent by the sender of the target session message and that is in the chat information.

On this basis, in step 140, the sending a session message that corresponds to the first target identifier and that is in the chat information to a user corresponding to the second target identifier specifically includes:
in a case that the first target identifier is the identifier of the sender of the target session message, sending a first session message to the user corresponding to the second target identifier, where the first session message includes a session message that is sent by the sender of the target session message and that is in the chat information.

In this way, in a case that the user needs to forward all session messages that are sent by the sender of the target session message and that are in the chat information, the user may forward all session messages that correspond to the first target identifier (corresponding to the sender of the target session message) and that are in the chat information to the user corresponding to the second target identifier.

In particular, in a case that the sender of the target session message has a plurality of session messages in the chat information, all the session messages that are sent by the sender and that are in the chat information may be forwarded to the user corresponding to the second target identifier.

For example, as shown in FIG. 2, the target session message is a message sent by Wang Wu, and body text of the message is "@Zhang San, @Li Si, the XXX movie you've been discussing in the group the last couple of days is great. You have made a lot of good opinions. I'm going to see it tonight too." It can be seen that, the first target identifier is an identifier of Wang Wu, and session messages that correspond to the first target identifier and that are in the chat information are all session messages that are sent by Wang Wu and that are in the chat information. A user corresponding to the second target identifier is Zhao Liu. All the session messages that are sent by Wang Wu and that are in the chat information may be further sent to Zhao Liu in response to an operation of associating the identifier of Wang Wu with the identifier of Zhao Liu.

In another specific embodiment, using an example in which the first target identifier is an identifier of a user involved in the target session message, in a case that the first target identifier is the identifier of the user involved in the target session message, the session message that corresponds to the first target identifier and that is in the chat information may be a second session message. The second session message includes a session message that is of a target user and that is in the chat information, and the target user is the user involved in the target session message.

On this basis, in step 140, the sending a session message that corresponds to the first target identifier and that is in the chat information to a user corresponding to the second target identifier specifically includes:
in a case that the first target identifier is the identifier of the user involved in the target session message, sending a second session message to the user corresponding to the second target identifier, where the second session message includes a session message that is of a target user and that is in the chat information, and the target user is the user involved in the target session message.

In this way, in a case that the user needs to forward all session messages that are related to the user involved in the target session message and that are in the chat information, the user may forward all the session messages that correspond to the first target identifier (corresponding to the user involved in the target session message) and that are in the chat information to the user corresponding to the second target identifier.

In particular, in a case that there are a plurality of second session messages, all the session messages of the user involved in the target session message may be forwarded to the user corresponding to the second target identifier.

The user involved in the target session message may include a directly involved user and an indirectly involved user.

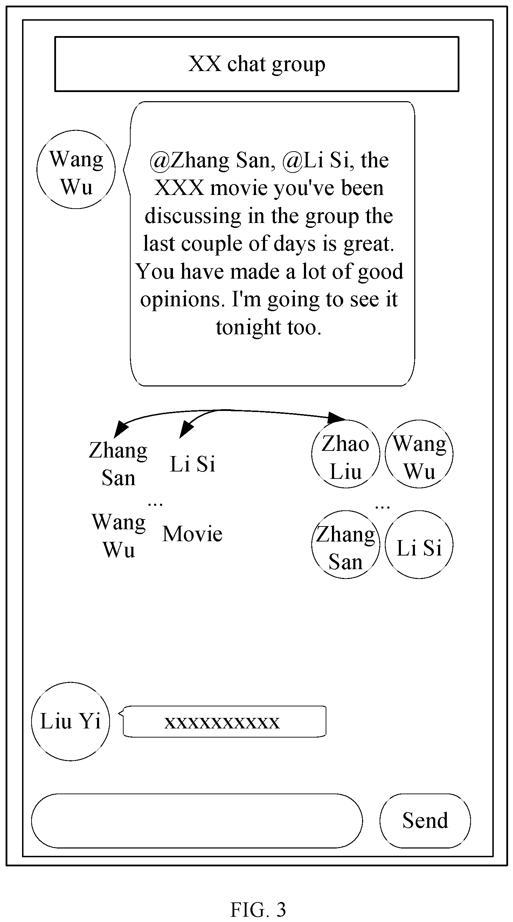

The directly involved user may be a user corresponding to a user name extracted from the body text of the target session message. For example, the body text of the target session message mentions "@Zhang San", and "Zhang San" may be a directly involved user. The following provides specific descriptions by using FIG. 3 as an example.

As shown in FIG. 3, the target session message is a message sent by Wang Wu, and body text of the message is "@Zhang San, @Li Si, the XXX movie you've been discussing in the group the last couple of days is great. You have made a lot of good opinions. I'm going to see it tonight too." It can be seen that, the first target identifier is an identifier of Zhang San and an identifier of Li Si, and the session message that corresponds to the first target identifier and that is in the chat information is the second session message. To be specific, the second session message is all session messages of Zhang San and Li Si in the chat information. A user corresponding to the second target identifier is Zhao Liu. All the session messages of Zhang San and Li Si in the chat information may be further sent to Zhao Liu in response to an operation of associating the identifier of Zhang San and the identifier of Li Si with the identifier of Zhao Liu.

The indirectly involved user may be a user implicitly mentioned in the target session message. For example, if the body text of the target session message mentions that "the person who speaks the most will treat today", an application may identify, through statistics collection, a user corresponding to "the person who speaks the most", and take the user as the indirectly involved user.

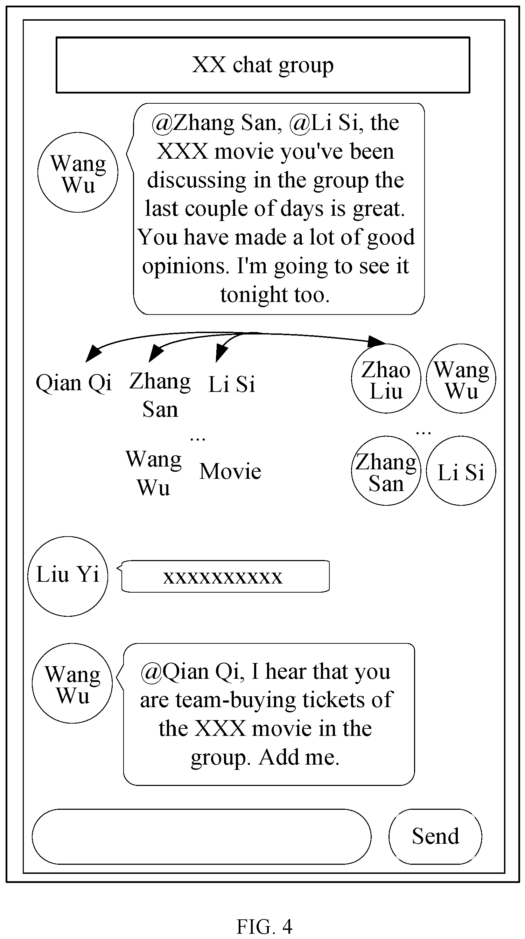

Certainly, the indirectly involved user may alternatively be a user involved in another session message having the same topic as the target session message. The following provides specific descriptions by using FIG. 4 as an example.

As shown in FIG. 4, the target session message is a message sent by Wang Wu, and body text of the message is "@Zhang San, @Li Si, the XXX movie you've been discussing in the group the last couple of days is great. You have made a lot of good opinions. I'm going to see it tonight too." It can be seen that, users directly involved in the body text of the target session message include Zhang San and Li Si. The topic of the target session message is "movie".

In addition, as shown in FIG. 4, another session message that is other than the target session message and that is in the chat information (having the same topic "movie" as the target session message) is a message sent by Wang Wu, and the body text of the message is "@Qian Qi, I hear that you are team-buying tickets of the XXX movie in the group. Add me." It can be seen that, the indirectly involved user includes "Qian Qi". Therefore, in a case that the first target identifier is the identifier of the user involved in the target session message, the first target identifier may include: the identifier of Zhang San, the identifier of Li Si, and the identifier of Qian Qi. Session messages that correspond to the first target identifier and that are in the chat information are all session messages of Zhang San, Li Si, or Qian Qi involved in the body text of session messages in the chat information. A user corresponding to the second target identifier may be Zhao Liu. All the session messages of Zhang San, Li Si, or Qian Qi involved in the session messages in the chat information may be further sent to Zhao Liu in response to an operation of associating the identifier of Zhang San, the identifier of Li Si, or the identifier of Qian Qi with the identifier "Zhao Liu".

In another specific embodiment, using an example in which the first target identifier is an identifier of a topic involved in the target session message, in a case that the first target identifier is the identifier of topic involved in the target session message, the session message that corresponds to the first target identifier and that is in the chat information may be a third session message, where the third session message includes a session message that relates to the topic and that is in the chat information.

The topic involved in the target session message may be study, examination, shopping, securities, commodities, movies, or the like. This is not specifically limited in this application.

On this basis, in step 140, the sending a session message that corresponds to the first target identifier and that is in the chat information to a user corresponding to the second target identifier specifically includes:
in a case that the first target identifier is the identifier of the topic involved in the target session message, sending a third session message to the user corresponding to the second target identifier, where the third session message includes a session message that relates to the topic and that is in the chat information.

In this way, in a case that the user needs to forward all third session messages in the chat information, the user may forward all session messages that correspond to the first target identifier (corresponding to the topic of the target session message) and that are in the chat information to the user corresponding to the second target identifier.

In particular, in a case that there are a plurality of third session messages, all the session messages that are of the topic involved in the body text of the target session message and that are involved in the chat information may be forwarded to the user corresponding to the second target identifier.

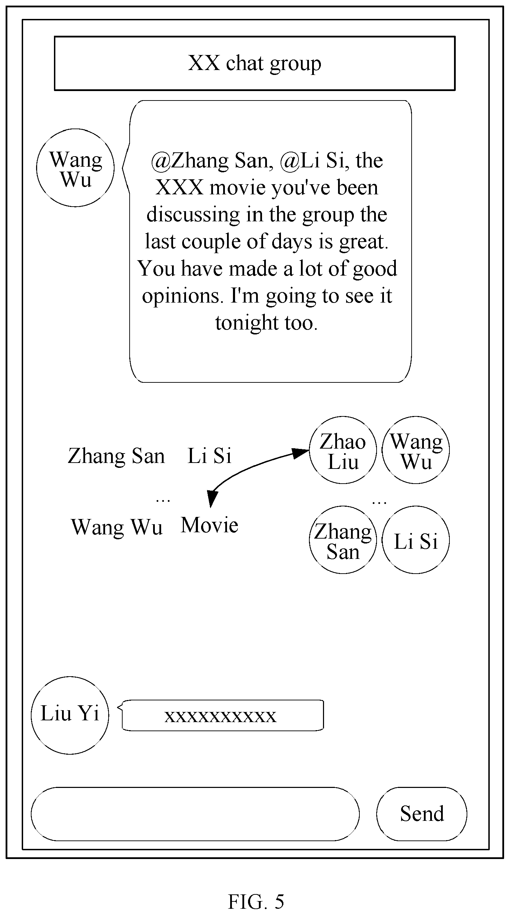

For example, as shown in FIG. 5, the target session message is a message sent by Wang Wu, and body text of the message is "@Zhang San, @Li Si, the XXX movie you've been discussing in the group the last couple of days is great. You have made a lot of good opinions. I'm going to see it tonight too." It can be seen that, the first target identifier is "movie", and session messages that correspond to the first target identifier and that are in the chat information are all session messages with the topic "movie" in the chat information. A user corresponding to the second target identifier may be Zhao Liu. All the session messages with the topic "movie" in the chat information may be further sent to Zhao Liu in response to an operation of associating the identifier "movie" with the identifier "Zhao Liu".

In addition, the first target identifier may alternatively be a plurality of identifiers in the M first identifiers. Specifically, the first target identifier may alternatively be a combination of at least two identifiers of different types, so that a session message in the chat information can be forwarded according to a combination type. The following provides descriptions by using examples.

In a specific embodiment, the first target identifier includes a first specified identifier and a second specified identifier. The first specified identifier may include at least one of the following: an identifier of a sender of the target session message, an identifier of a user involved in the target session message, and an identifier of a topic involved in the target session message. The second specified identifier may include at least one of the following: an identifier of a sender of the target session message, an identifier of a user involved in the target session message, and an identifier of a topic involved in the target session message. The first specified identifier may be different from the second specified identifier, or may be the same as the second specified identifier.

On this basis, in step 140, the sending a session message that corresponds to the first target identifier and that is in the chat information to a user corresponding to the second target identifier includes:
sending a specified session message in the chat information to the user corresponding to the second target identifier.

The specified session message may be all session messages that meet a specific condition. The specific condition is a condition of association with the first specified identifier and the second specified identifier.

In this way, all session messages that are associated with the first specified identifier and the second specified identifier and that are in the chat information may be forwarded to the user corresponding to the second target identifier.

For example, the specified session message includes any one of the following:
a session message that relates to both the first specified identifier and the second specified identifier and that is in the chat information;
a session message that relates to the first specified identifier and that is in the chat information and a session message that relates to the second specified identifier and that is in the chat information; and
a session message that relates to the second specified identifier and that is in a session message sent by a user corresponding to the first specified identifier.

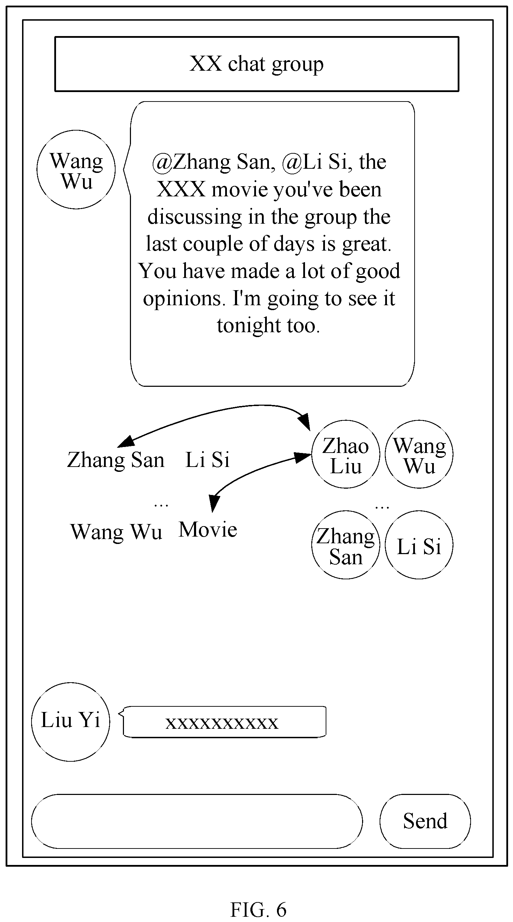

Specifically, using an example in which the specified session message is a session message that relates to both the first specified identifier and the second specified identifier and that is in the chat information, as shown in FIG. 6, the target session message is a message sent by Wang Wu, and body text of the message is "@Zhang San, @Li Si, the XXX movie you've been discussing in the group the last couple of days is great. You have made a lot of good opinions. I'm going to see it tonight too." The first specified identifier may be the identifier "Zhang San", and the second specified identifier may be the identifier "movie". The session message that corresponds to the first target identifier and that is in the chat information is a session message that relates to both "Zhang San" and "movie" and that is in the chat information. A user corresponding to the second target identifier may be Zhao Liu. All session messages that relate to both "Zhang San" and "movie" and that are in the chat information may be further sent to Zhao Liu in response to an operation of associating the identifier "Zhang San" and the identifier "movie" with the identifier "Zhao Liu".

It may be understood that, a session message that relates to both the identifier "Zhang San" and the identifier "movie" and that is in the chat information may be a session message about "movie" sent by Zhang San, or may be a session message that mentions Zhang San and movie and that is in the chat information.

Specifically, using an example in which the specified session message is a session message that relates to the first specified identifier and that is in the chat information and a session message that relates to the second specified identifier and that is in the chat information, as shown in FIG. 6, the session message that corresponds to the first target identifier and that is in the chat information is a session message that relates to "Zhang San" and that is in the chat information and a session message that relates to "movie" and that is in the chat information. A user corresponding to the second target identifier may be Zhao Liu. All session messages that relate to "Zhang San" and that are in the chat information and all session messages that relate to "movie" and that are in the chat information may be further sent to Zhao Liu.

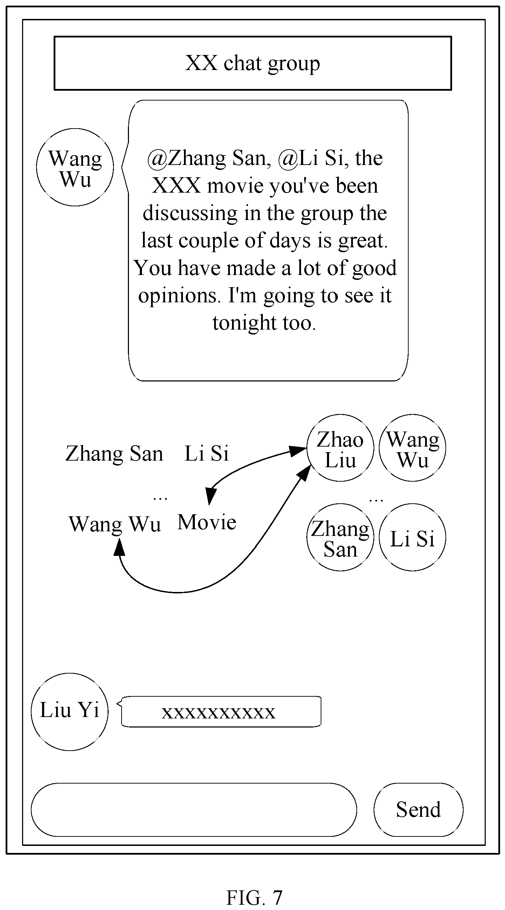

Specifically, using an example in which the specified session message is a session message that relates to the second specified identifier and that is in the session message sent by the user corresponding to the first specified identifier, as shown in FIG. 7, the target session message is a message sent by Wang Wu, and body text of the message is "@Zhang San, @Li Si, the XXX movie you've been discussing in the group the last couple of days is great. You have made a lot of good opinions. I'm going to see it tonight too." The first specified identifier may be the identifier "Wang Wu", and the second specified identifier may be the identifier "movie". Session messages that correspond to the first target identifier and that are in the chat information are all session messages that are sent by "Wang Wu" and that are in the chat information, and all session messages in which there is the identifier "movie" and that are in the chat information. A user corresponding to the second target identifier may be Zhao Liu. All the session messages that relate to "movie", that are in the session messages sent by "Wang Wu", and that are in the chat information may be further sent to Zhao Liu in response to an operation of associating the identifier "Wang Wu" and the identifier "movie" with the identifier "Zhao Liu".

In addition, in this embodiment of this application, the second target identifier is at least one identifier in the P user identifiers. The P user identifiers may be identifiers of different types. Specifically, the P user identifiers may be one type of identifiers meeting a particular condition.

For example, the P user identifiers may include at least one of the following:
an identifier of a user involved in the target session message;
an identifier corresponding a contact contacted by the user within specified duration from a current time; and
identifiers corresponding to contacts contacted by the user in a unit period at frequencies ranking top N, where N is a positive integer.

In this way, the P user identifiers with the particular condition may be used as one type of user identifiers for display, to ensure that the P user identifiers have relatively high associativity in various dimensions. In a case that a display area of P user identifiers has a limited area, P user identifiers that the user may select with a higher possibility are displayed preferentially, to quickly select the second target identifier, thereby improving the efficiency of determining the second target identifier.

Descriptions are provided by using an example in which the P user identifiers include the identifier corresponding to the user involved in the target session message. In a specific embodiment, the second target identifier includes the identifier corresponding to the user involved in the target session message, and there is a special case that the first target identifier and the second target identifier correspond to a same user. In this case, all session messages that are associated with the user and that are in the chat information may be forwarded to the user. The following provides descriptions by using examples.

In a case that the first target identifier is an identifier of a user type (for example, the identifier of the sender of the target session message or the identifier of the user involved in the target session message), the first target identifier and the second target identifier may correspond to a same user. The session message that corresponds to the first target identifier and that is in the chat information may be a fourth session message. The fourth session message is a session message in which there is content associated with the user corresponding to the second target identifier and that is in the chat information.

On this basis, in step 140, the sending a session message that corresponds to the first target identifier and that is in the chat information to a user corresponding to the second target identifier in response to the second input includes:
sending, in response to the second input, the fourth session message to the user corresponding to the second target identifier, where the fourth session message is a session message in which there is content associated with the user corresponding to the second target identifier and that is in the chat information.

In this way, in a case that the user needs to forward all session messages associated with a particular user (the user corresponding to the second target identifier), the user may forward all the session messages that correspond to the first target identifier (corresponding to the user corresponding to the second target identifier) and that are in the chat information to the user corresponding to the second target identifier.

In particular, in a case that there are a plurality of fourth session messages, all the session messages in which there is content associated with the user corresponding to the second target identifier and that are in the chat information may be forwarded to the user corresponding to the second target identifier.

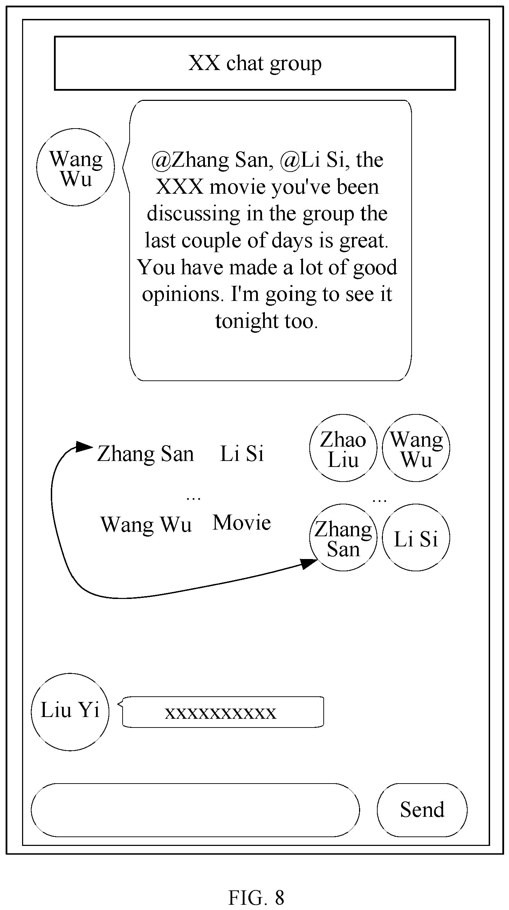

For example, as shown in FIG. 8, the target session message is a message sent by Wang Wu, and body text of the message is "@Zhang San, the XXX movie you've been discussing in the group the last couple of days is great. I'm going to see it tonight too." The first target identifier and the second target identifier may correspond to the same user "Zhang San", and the session messages that correspond to the first target identifier and that are in the chat information are all session messages in which there is content associated with Zhang San and that are in the chat information. A user corresponding to the second target identifier may be Zhang San. All the session messages in which there is content associated with Zhang San and that are in the chat information may be further sent to Zhang San in response to an operation of associating an identifier of the content associated with Zhang San with the identifier "Zhang San". It may be understood that, the content associated with Zhang San herein may be sent by another person.

In addition, in a specific embodiment, in this application, a plurality of session messages can be further forwarded at one time without the need to forward the plurality of session messages one by one, so that forwarding efficiency of the session messages is improved. For example, in step 110, the chat information is chat information in a chat group.

In step 120, the user identifier may be an identifier of a user in the chat group, or an identifier of a user outside the chat group. The user identifier includes at least one of: a user profile photo and a user name.

In step 140, there are a plurality of session messages corresponding to the first target identifier. In this way, because there may be a plurality of session messages that correspond to the first target identifier and that are in the chat information, the plurality of session messages can be forwarded to the user corresponding to the second target identifier at one time without the need to forward the plurality of session messages one by one, so that forwarding efficiency of the chat information is improved.

It should be noted that, the method for sending chat information provided in this embodiment of this application may be performed by an apparatus for sending chat information or a control module that is in the apparatus for sending chat information and that is configured to perform the method for sending chat information. In the embodiments of this application, an example in which the apparatus for sending chat information performs the method for sending chat information is used to describe the apparatus for sending chat information provided in the embodiments of this application.

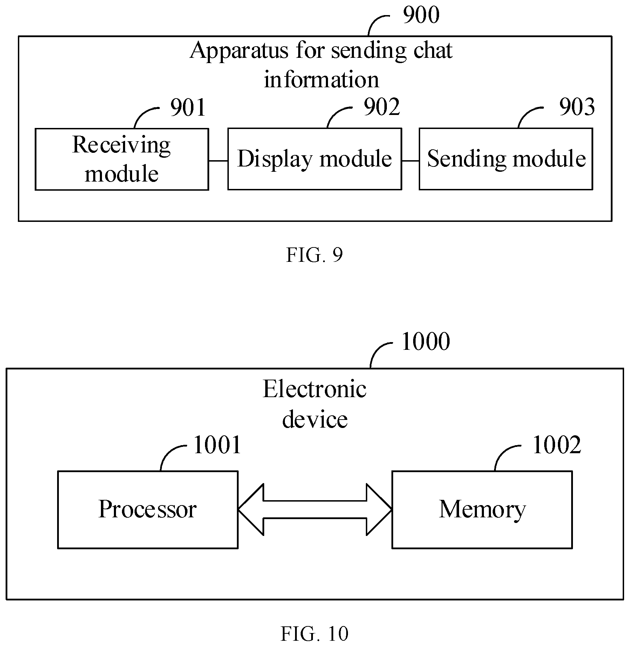

FIG. 9 is a schematic structural diagram of an apparatus for sending chat information according to an embodiment of this application.

As shown in FIG. 9, an embodiment of this application provides an apparatus 900 for sending chat information. The apparatus 900 may include:
a receiving module 901, configured to receive a first input by a user for a target session message in the chat information;
a display module 902, configured to: display M first identifiers and display P user identifiers according to the first input, where M and P are both positive integers;
the receiving module 901 is further configured to receive a second input by the user, where the second input is used to associate a first target identifier in the M first identifiers with a second target identifier in the P user identifiers; and
a sending module 903, configured to: send, in response to the second input, a session message that corresponds to the first target identifier and that is in the chat information to a user corresponding to the second target identifier.

The apparatus for sending chat information provided in this embodiment of this application may include the receiving module, configured to receive a first input by a user for a target session message in the chat information; the display module, configured to: display M first identifiers and display P user identifiers according to the first input, where M and P are both positive integers; the receiving module is further configured to receive a second input by the user, where the second input is used to associate a first target identifier in the M first identifiers with a second target identifier in the P user identifiers; and the sending module, configured to: send, in response to the second input, a session message that corresponds to the first target identifier and that is in the chat information to a user corresponding to the second target identifier. In this way, in a case that the user needs to forward all messages that are associated with a particular concern and that are in the chat information, the user may forward all session messages that correspond to the first target identifier (corresponding to the concern) and that are in the chat information to the user corresponding to the second target identifier, and does not need to manually search the chat information one by one for all messages associated with the first target identifier, so that forwarding efficiency of the chat information is improved.

Optionally, in the apparatus for sending chat information provided in this embodiment of this application, the first identifier is an identifier determined based on the target session message; and
the first identifier includes at least one of the following:
an identifier of a sender of the target session message;
an identifier of a user involved in the target session message; and
an identifier of a topic involved in the target session message.

In this way, one type of session messages with a specific condition have relatively high associativity in various dimensions, so that associated session messages are all forwarded as one type of session messages.

Optionally, in the apparatus for sending chat information provided in this embodiment of this application, a quantity of the first target identifier is 1.

The sending module is specifically configured to: in a case that the first target identifier is the identifier of the sender of the target session message, send a first session message to the user corresponding to the second target identifier, where the first session message includes a session message that is sent by the sender and that is in the chat information.

In this way, in a case that the user needs to forward all session messages that are sent by the sender of the target session message and that are in the chat information, the user may forward all session messages that correspond to the first target identifier (corresponding to the sender of the target session message) and that are in the chat information to the user corresponding to the second target identifier.

Alternatively, the sending module is specifically configured to:
in a case that the first target identifier is the identifier of the user involved in the target session message, send a second session message to the user corresponding to the second target identifier, where the second session message includes a session message that is of a target user and that is in the chat information, and the target user is the user involved in the target session message.

In this way, in a case that the user needs to forward all session messages that are related to the user involved in the target session message and that are in the chat information, the user may forward all the session messages that correspond to the first target identifier (corresponding to the user involved in the target session message) and that are in the chat information to the user corresponding to the second target identifier.

Alternatively, the sending module is specifically configured to:
in a case that the first target identifier is the identifier of the topic involved in the target session message, send a third session message to the user corresponding to the second target identifier, where the third session message includes a session message that relates to the topic and that is in the chat information.

In this way, in a case that the user needs to forward all third session messages in the chat information, the user may forward all session messages that correspond to the first target identifier (corresponding to the topic of the target session message) and that are in the chat information to the user corresponding to the second target identifier.

Optionally, in the apparatus for sending chat information provided in this embodiment of this application, the first target identifier includes a first specified identifier and a second specified identifier; and
the sending module is configured to:
send a specified session message in the chat information to the user corresponding to the second target identifier, where
the specified session message includes any one of the following:
   a session message that relates to both the first specified identifier and the second specified identifier and that is in the chat information;
   a session message that relates to the first specified identifier and that is in the chat information and a session message that relates to the second specified identifier and that is in the chat information; and
   a session message that relates to the second specified identifier and that is in a session message sent by a user corresponding to the first specified identifier.

In this way, in a case that the first target identifier is a combination of at least two identifiers of different types, one type of session messages in the chat information can all be forwarded according to a combination type.

Optionally, in the apparatus for sending chat information provided in this embodiment of this application, the user identifier includes at least one of the following:
an identifier of a user involved in the target session message;
an identifier corresponding a contact contacted by the user within specified duration from a current time; and
identifiers corresponding to contacts contacted by the user in a unit period at frequencies ranking top N, where N is a positive integer.

In this way, the P user identifiers with the particular condition may be used as one type of user identifiers for display, to ensure that the P user identifiers have relatively high associativity in various dimensions. In a case that a display area of P user identifiers has a limited area, P user identifiers that the user may select with a higher possibility are displayed preferentially, to quickly select the second target identifier, thereby improving the efficiency of determining the second target identifier.

The apparatus for sending chat information in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The apparatus for sending chat information in this embodiment of this application may be an apparatus with an operating system. The operating system may be an Android (Android) operating system, may be an iOS operating system, or may be another possible operating system. This is not specifically limited in this embodiment of this application.

The apparatus for sending chat information provided in this embodiment of this application can implement each process for implementing the method embodiments from FIG. 1 to FIG. 8. To avoid repetition, details are not described herein again.

Optionally, as shown in FIG. 10, an embodiment of this application further provides an electronic device 1000, including a processor 1001, a memory 1002, and a program or an instruction that is stored in the memory 1002 and that can be run on the processor 1001. When the program or the instruction is executed by the processor 1001, each process of the foregoing embodiments of the method for sending chat information is implemented, with same technical effect achieved. To avoid repetition, details are not described herein again.

It should be noted that the electronic device in this embodiment of this application includes the foregoing mobile electronic device and the foregoing non-mobile electronic device.

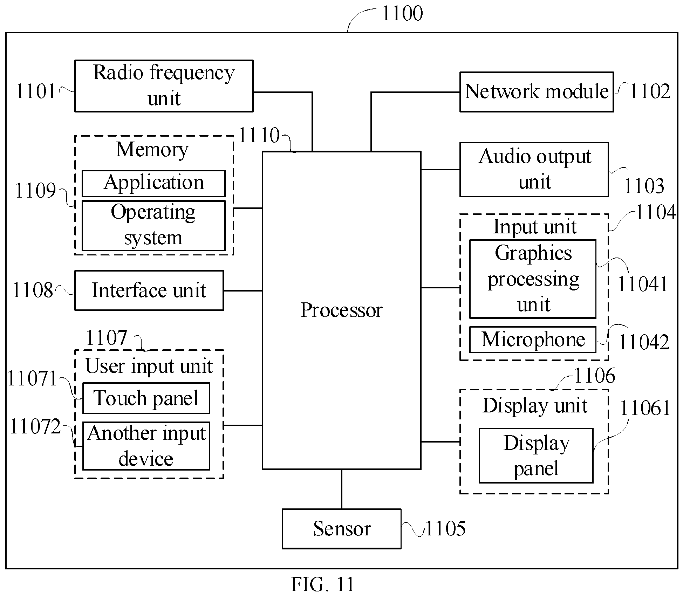

FIG. 11 is a schematic diagram of a hardware structure of an electronic device according to an embodiment of this application.

The electronic device 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the electronic device 1100 may further include a power supply (such as a battery) that supplies power to each component. The power supply may be logically connected to the processor 1110 by using a power management system, to implement functions such as charging and discharging management, and power consumption management by using the power management system. The structure of the electronic device shown in FIG. 11 does not constitute a limitation on the electronic device. The electronic device may include components more or fewer than those shown in the figure, or combine some components, or have different component arrangements. Details are not described herein again.

The user input unit 1107 is configured to receive a first input by a user for a target session message in the chat information.

The display unit 1106 is configured to: display M first identifiers and display P user identifiers according to the first input, where M and P are both positive integers.

The user input unit 1107 is further configured to receive a second input by the user, where the second input is used to associate a first target identifier in the M first identifiers with a second target identifier in the P user identifiers.

The radio frequency unit 1101 is configured to: send, in response to the second input, a session message that corresponds to the first target identifier and that is in the chat information to a user corresponding to the second target identifier.

The electronic device provided in this embodiment of this application may include the user input unit 1107, configured to receive a first input by a user for a target session message in the chat information; the display unit 1106, configured to: display M first identifiers and display P user identifiers according to the first input, where M and P are both positive integers; the user input unit 1107 is further configured to receive a second input by the user, where the second input is used to associate a first target identifier in the M first identifiers with a second target identifier in the P user identifiers; and the radio frequency unit 1101, configured to: send, in response to the second input, a session message that corresponds to the first target identifier and that is in the chat information to a user corresponding to the second target identifier. In this way, in a case that the user needs to forward all messages that are associated with a particular concern and that are in the chat information, the user may forward all session messages that correspond to the first target identifier (corresponding to the concern) and that are in the chat information to the user corresponding to the second target identifier, and does not need to manually search the chat information one by one for all messages associated with the first target identifier, so that forwarding efficiency of the chat information is improved.

Optionally, in the electronic device provided in this embodiment of this application, the first identifier is an identifier determined based on the target session message; and
the first identifier includes at least one of the following:
an identifier of a sender of the target session message;
an identifier of a user involved in the target session message; and
an identifier of a topic involved in the target session message.

In this way, one type of session messages with a specific condition have relatively high associativity in various dimensions, so that associated session messages are all forwarded as one type of session messages.

Optionally, in the electronic device provided in this embodiment of this application, a quantity of the first target identifier is 1.

The radio frequency unit 1101 is specifically configured to: in a case that the first target identifier is the identifier of the sender of the target session message, send a first session message to the user corresponding to the second target identifier, where the first session message includes a session message that is sent by the sender and that is in the chat information.

In this way, in a case that the user needs to forward all session messages that are sent by the sender of the target session message and that are in the chat information, the user may forward all session messages that correspond to the first target identifier (corresponding to the sender of the target session message) and that are in the chat information to the user corresponding to the second target identifier.

Alternatively, the radio frequency unit 1101 is specifically configured to:
in a case that the first target identifier is the identifier of the user involved in the target session message, send a second session message to the user corresponding to the second target identifier, where the second session message includes a session message that is of a target user and that is in the chat information, and the target user is the user involved in the target session message.

In this way, in a case that the user needs to forward all session messages that are related to the user involved in the target session message and that are in the chat information, the user may forward all the session messages that correspond to the first target identifier (corresponding to the user involved in the target session message) and that are in the chat information to the user corresponding to the second target identifier.

Alternatively, the radio frequency unit 1101 is specifically configured to:
in a case that the first target identifier is the identifier of the topic involved in the target session message, send a third session message to the user corresponding to the second target identifier, where the third session message includes a session message that relates to the topic and that is in the chat information.

In this way, in a case that the user needs to forward all third session messages in the chat information, the user may forward all session messages that correspond to the first target identifier (corresponding to the topic of the target session message) and that are in the chat information to the user corresponding to the second target identifier.

Optionally, in the electronic device provided in this embodiment of this application, the first target identifier includes a first specified identifier and a second specified identifier; and
the radio frequency unit 1101 is configured to:
send a specified session message in the chat information to the user corresponding to the second target identifier, where
the specified session message includes any one of the following:
   a session message that relates to both the first specified identifier and the second specified identifier and that is in the chat information;
   a session message that relates to the first specified identifier and that is in the chat information and a session message that relates to the second specified identifier and that is in the chat information; and
   a session message that relates to the second specified identifier and that is in a session message sent by a user corresponding to the first specified identifier.

In this way, in a case that the first target identifier is a combination of at least two identifiers of different types, one type of session messages in the chat information can all be forwarded according to a combination type.

Optionally, in the electronic device provided in this embodiment of this application, the user identifier includes at least one of the following:
an identifier of a user involved in the target session message;
an identifier corresponding a contact contacted by the user within specified duration from a current time; and
identifiers corresponding to contacts contacted by the user in a unit period at frequencies ranking top N, where N is a positive integer.

In this way, the P user identifiers with the particular condition may be used as one type of user identifiers for display, to ensure that the P user identifiers have relatively high associativity in various dimensions. In a case that a display area of P user identifiers has a limited area, P user identifiers that the user may select with a higher possibility are displayed preferentially, to quickly select the second target identifier, thereby improving the efficiency of determining the second target identifier.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (for example, a camera) in a video capture mode or an image capture mode. The display unit 1106 may include a display panel 11061. The display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (such as a volume control button or a power on/off button), a trackball, a mouse, and a joystick. Details are not described herein. The memory 1109 may be configured to store a software program and various data, including but not limited to an application and an operating system. An application processor and a modem processor may be integrated into the processor 1110, the application processor mainly processes an operating system, a user interface, an application, and the like, and the modem processor mainly processes wireless communication. It may be understood that, alternatively, the modem processor may not be integrated into the processor 1110.

An embodiment of this application further provides a readable storage medium. The readable storage medium stores a program or an instruction, and when the program or the instruction is executed by a processor, each process of the foregoing method embodiments of the method for sending chat information is implemented, with same technical effect achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or a compact disc.

An embodiment of this application further provides a chip. The chip includes a processor and a communication interface, the communication interface is coupled to the processor, and the processor is configured to run a program or an instruction to implement each process of the foregoing embodiments of the method for sending chat information, and same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements that are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical solutions of this application essentially or the part contributing to the prior art may be reflected in a form of a computer software product. The computer software product is stored in a storage medium (such as a ROM/RAM, a magnetic disk, or a compact disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A method for sending chat information, wherein the method comprises:
receiving a first input by a user for a target session message in the chat information;
displaying M first identifiers and displaying P user identifiers according to the first input, wherein M and P are both positive integers;
receiving a second input by the user, wherein the second input is used to associate a first target identifier in the M first identifiers with a second target identifier in the P user identifiers; and
sending, in response to the second input, a session message that corresponds to the first target identifier and that is in the chat information to a user corresponding to the second target identifier.

2. The method according to claim 1, wherein the first identifier is an identifier determined based on the target session message; and
the first identifier comprises at least one of the following:
an identifier of a sender of the target session message;
an identifier of a user involved in the target session message; and
an identifier of a topic involved in the target session message.

3. The method according to claim 2, wherein a quantity of the first target identifier is 1, and the sending a session message that corresponds to the first target identifier and that is in the chat information to a user corresponding to the second target identifier comprises:
in a case that the first target identifier is the identifier of the sender of the target session message, sending a first session message to the user corresponding to the second target identifier, wherein the first session message comprises a session message that is sent by the sender and that is in the chat information; or
in a case that the first target identifier is the identifier of the user involved in the target session message, sending a second session message to the user corresponding to the second target identifier, wherein the second session message comprises a session message that is of a target user and that is in the chat information, and the target user is the user involved in the target session message; or
in a case that the first target identifier is the identifier of the topic involved in the target session message, sending a third session message to the user corresponding to the second target identifier, wherein the third session message comprises a session message that relates to the topic and that is in the chat information.

4. The method according to claim 1, wherein the first target identifier comprises a first specified identifier and a second specified identifier; and
the sending a session message that corresponds to the first target identifier and that is in the chat information to a user corresponding to the second target identifier comprises:
sending a specified session message in the chat information to the user corresponding to the second target identifier, wherein
the specified session message comprises any one of the following:
a session message that relates to both the first specified identifier and the second specified identifier and that is in the chat information;
a session message that relates to the first specified identifier and that is in the chat information and a session message that relates to the second specified identifier and that is in the chat information; and
a session message that relates to the second specified identifier and that is in a session message sent by a user corresponding to the first specified identifier.

5. The method according to claim 1, wherein the user identifier comprises at least one of the following:
an identifier of a user involved in the target session message;
an identifier corresponding a contact contacted by the user within specified duration from a current time; and
identifiers corresponding to contacts contacted by the user in a unit period at frequencies ranking top N, wherein N is a positive integer.

6. An apparatus for sending chat information, wherein the apparatus comprises:
a receiving module, configured to receive a first input by a user for a target session message in the chat information;
a display module, configured to: display M first identifiers and display P user identifiers according to the first input, wherein M and P are both positive integers;
the receiving module is further configured to receive a second input by the user, wherein the second input is used to associate a first target identifier in the M first identifiers with a second target identifier in the P user identifiers; and
a sending module, configured to: send, in response to the second input, a session message that corresponds to the first target identifier and that is in the chat information to a user corresponding to the second target identifier.

7. The apparatus according to claim 6, wherein the first identifier is an identifier determined based on the target session message; and
the first identifier comprises at least one of the following:
an identifier of a sender of the target session message;
an identifier of a user involved in the target session message; and
an identifier of a topic involved in the target session message.

8. The apparatus according to claim 7, wherein a quantity of the first target identifier is 1, and the sending module is specifically configured to:
in a case that the first target identifier is the identifier of the sender of the target session message, send a first session message to the user corresponding to the second target identifier, wherein the first session message comprises a session message that is sent by the sender and that is in the chat information; or
in a case that the first target identifier is the identifier of the user involved in the target session message, send a second session message to the user corresponding to the second target identifier, wherein the second session message comprises a session message that is of a target user and that is in the chat information, and the target user is the user involved in the target session message; or
in a case that the first target identifier is the identifier of the topic involved in the target session message, send a third session message to the user corresponding to the second target identifier, wherein the third session message comprises a session message that relates to the topic and that is in the chat information.

9. The apparatus according to claim 6, wherein the first target identifier comprises a first specified identifier and a second specified identifier; and
the sending module is configured to:
send a specified session message in the chat information to the user corresponding to the second target identifier, wherein
the specified session message comprises any one of the following:
a session message that relates to both the first specified identifier and the second specified identifier and that is in the chat information;
a session message that relates to the first specified identifier and that is in the chat information and a session message that relates to the second specified identifier and that is in the chat information; and
a session message that relates to the second specified identifier and that is in a session message sent by a user corresponding to the first specified identifier.

10. The apparatus according to claim 6, wherein the user identifier comprises at least one of the following:
an identifier of a user involved in the target session message;
an identifier corresponding a contact contacted by the user within specified duration from a current time; and
identifiers corresponding to contacts contacted by the user in a unit period at frequencies ranking top N, wherein N is a positive integer.

11. An electronic device, comprising a processor, a memory, and a program or an instruction that is stored in the memory and that can be run on the processor, wherein when the program or the instruction is executed by the processor, the steps of the method for sending chat information according to any one of claims 1 to 5 are implemented.

12. A readable storage medium, wherein the readable storage medium stores a program or an instruction, and when the program or the instruction is executed by a processor, the steps of the method for sending chat information according to any one of claims 1 to 5 are implemented.

13. A chip, wherein the chip comprises a processor and a communication interface, the communication interface is coupled to the processor, and the processor is configured to run a program or an instruction, to implement the steps of the method for sending chat information according to any one of claims 1 to 5.

14. A computer program product, wherein the computer program product is executed by at least one processor to implement the steps of the method for sending chat information according to any one of claims 1 to 5.

15. An electronic device, wherein the electronic device is configured to perform the steps of the method for sending chat information according to any one of claims 1 to 5.
